# EUROPÄISCHE PATENTANMELDUNG

(11) **EP 2 372 182 A1**
(43) Veröffentlichungstag der Anmeldung: **05.10.2011**
(21) Anmeldenummer: 11154163.7
(22) Anmeldetag: 11.02.2011
(51) Int. Cl.: F16D 23/06

(54) **Baueinheit zur Drehmomentübertragung**

(30) Priorität: 26.02.2010 DE 102010009389
(71) Anmelder: Schaeffler Technologies GmbH & Co. KG, 91074 Herzogenaurach (DE)
(72) Erfinder: Karais, Thomas, 90449, Nürnberg (DE); Walther, Volkhard, 91074, Herzogenaurach (DE)

(57) **Zusammenfassung**

Die Erfindung betrifft eine Baueinheit (1) mit zwei Drehmoment übertragenden, konzentrisch angeordneten Bauteile (2, 12), wobei das erste Bauteil (2) eine Oberfläche (3) mit einer äußeren Verzahnung (4) aufweist, das zweite Bauteil (12) eine Oberfläche (13) mit einer inneren Verzahnung (14) aufweist, die in die äußere Verzahnung (4) eingreift, und eines der beiden Bauteile (2, 12) ein Funktionselement (10) aufweist, welches eine unterschiedliche Belastung der einzelnen Zähne (5, 15) mindestens einer der Verzahnungen (4, 14) bewirkt, wobei zumindest eine der Verzahnungen (4, 14) einen Teilungsfehler aufweist, um die durch das Funktionselement (10) erzeugten, unterschiedlichen Zahnbelastungen zu vergleichmäßigen.

## Beschreibung

### Gebiet der Erfindung

Die Erfindung betrifft eine Baueinheit mit zwei Drehmoment übertragenden, konzentrisch angeordneten Bauteilen, wobei das erste Bauteil eine Oberfläche mit einer äußeren Verzahnung aufweist, das zweite Bauteil eine Oberfläche mit einer inneren Verzahnung aufweist, die in die äußere Verzahnung eingreift, und eines der beiden Bauteile ein Funktionselement aufweist, welches eine unterschiedliche Belastung der einzelnen Zähne mindestens einer der Verzahnungen bewirkt.

### Hintergrund der Erfindung

Derartige Baueinheiten sind der Fachwelt in den unterschiedlichsten Anwendungen, beispielsweise als Getriebeverzahnungen, bekannt. Die Verzahnungen der Bauteile weisen Zähne auf, die alle bzw. fast alle äquidistant voneinander beabstandet sind. Daneben gibt es Bereiche, in denen die Verzahnung beispielsweise durch Ausnehmungen für Vorsynchronisationselemente unterbrochen ist oder die Zähne breiter ausfallen und dann beispielsweise eine Zahnlücke in der Gegenverzahnung eingebracht ist, um die Bauteile korrekt zueinander zu positionieren.

Aus DE 38 17 767 A1 ist eine hülsenartige Schiebemuffe bekannt, die mit einer Innenverzahnung in die Außenverzahnung eines zylindrischen Synchronkörpers eingreift. Um die durch Härteverzüge entstandene Kippneigung der Schiebemuffe zu reduzieren, ist der Zahndurchmesser der Verzahnung so angepasst, dass eine exakte Gleitführung der Schiebemuffe unter Einhaltung definierter Spiele gesichert ist.

DE 100 18 094 A1 offenbart eine Schiebemuffe mit einem spanlos hergestellten, wellenförmigen, eine Innenverzahnung aufweisenden Muffenkörper und Scheiben als Schaltgabelführungen. Die Scheiben greifen mit nach innen ragenden Keilen in den Muffenkörper ein. Dabei können die Profile des Muffenkörpers und der Scheiben mit gleicher oder abweichender Teilung ineinander greifen.

Dadurch dass bei den Baueinheiten des Standes der Technik häufig die einzelnen Bauteile nicht rotationssymmetrisch sind, sei es, weil die Verzahnungen nicht voll umlaufen, sondern in Verzahnungssegmente gegliedert sind, sei es, aus geometrischen Gründen, wirken auf die einzelnen Zähne unterschiedliche Kräfte. Insbesondere die Zähne einer Verzahnung, die Zahnfenstern benachbart sind, erfahren eine starke Überhöhung der Zahnkraft, während die übrigen Zähne deutlich weniger Last übertragen. In den Bauteilen entstehen somit unerwünschte Spannungsspitzen, die zum Ausfall führen können bzw. einer weiteren Materialreduzierung der Bauteile entgegenstehen. Bei Bauteilen mit Zahnfenstern sind insbesondere der erste und letzte Zahn eines Verzahnungssegments kritisch, da deren Zahnkräfte die Kerbspannungen im Zahnfenster und damit des ganzen Bauteils besonders stark bestimmen.

Zur Lösung dieses Problems sind bei diversen Konstruktionen der erste und letzte Zahn eines Segments durch Dickenreduzierung komplett außer Eingriff genommen, wodurch der Belastungseintrag in das Gegenbauteil etwas vom Zahnfenster weggerückt wird. Die Problematik der ungleichmäßigen Lastverteilung zwischen den Zähnen bleibt jedoch dabei im Grundsatz bestehen und verschiebt sich nur um einen Zahn. Außerdem stehen weniger tragende Zähne zur Drehmomentübertragung zur Verfügung.

### Aufgabe der Erfindung

Aufgabe der Erfindung ist es daher, eine Baueinheit zu schaffen, die bei gleichem Bauraum ein höheres Drehmoment übertragen kann bzw. deren Lebensdauer gesteigert ist.

### Lösung der Aufgabe

Erfindungsgemäß wird diese Aufgabe bei einer Baueinheit nach dem Oberbegriff des Anspruchs 1 dadurch gelöst, dass zumindest eine der Verzahnungen einen Teilungsfehler aufweist, um die durch das Funktionselement bzw. die Geometrie der Bauteile erzeugten, unterschiedlichen Zahnbelastungen zu vergleichmäßigen. Die mittels an sich bekannter Finite-Elemente-Methoden berechnete Abweichungen der einzelnen Zähne voneinander durch Asymmetrien, Anordnungsversatz oder Zahnprofilvariation, Teilungsfehler genannt, wird somit gezielt dazu eingesetzt, die am stärksten belasteten Bereiche der Bauteile zu entlasten. In jedem Fall wird durch Einführung eines speziell angepassten Teilungsfehlers bei ansonsten gleicher Bauart der Bauteile die Übertragungssicherheit erheblich gesteigert.

Die Erfindung wird im folgenden anhand einer Synchronisiereinheit beschrieben. Sie ist genauso auf andere Getriebeanwendungen wie auch ganz allgemein auf Welle-Naben-Verbindungen anwendbar.

Erfindungsgemäß betrifft der Teilungsfehler nicht nur einen Zahn, sondern mindestens zwei benachbarte Zähne. Ist das Funktionselement als eine Ausnehmung bzw. als ein Zahnfenster ausgebildet, sind die zu entlastenden Bereiche meistens die direkt an die Ausnehmung angrenzenden Zähne.

In einer Variante ist vorgesehen, jeden oder fast jeden Zahn mit einem Teilungsfehler zu versehen, so dass der Zahn, der am stärksten belastet ist, nur unwesentlich stärker als der am wenigsten belastete Zahn belastet ist. Idealerweise werden die Belastungsunterschiede durch den Teilungsfehler um mindestens 80% gemindert. In der Regel wird die Berechnung des Teilungsfehlers daher zu einer Verzahnung führen, die im Betrieb der Synchronisiereinheit eine weitgehend gleichmäßige Kraftverteilung auf alle Zähne sicherstellt. Alternativ ist auch denkbar, in Bezug auf die Verzahnung gezielt ungleichmäßige Kraftverteilung einzubringen, die aber zu besonders niedrigen Spannungen in den mit der Verzahnung verbundenen oder zusammenwirkenden Bauteilen führt. Dadurch kann die Synchronisiereinheit mit weniger Material ausgelegt werden, was einen Gewichtsvorteil und einen Bauraumvorteil ergibt. In Versuchen hat sich herausgestellt, dass die Spannungen in Synchronkörpern als ersten Bauteilen und als Schiebemuffen ausgebildeten zweiten Bauteilen um bis zu 30% zurückgehen. Dies erlaubt gegebenenfalls sogar, einen Synchronkörper aus Blech in der Synchronisiereinheit zu verwenden, womit erhebliche Material-und Gewichtseinsparungen einhergehen.

Bei der Auslegung des Teilungsfehlers kann daher je nach Art der verwendeten Bauteile entweder auf die Optimierung der gesamten Synchronisiereinheit abgestellt werden. Alternativ sind einzelne Bauteile bzw. Bereiche gezielt etwas höher belastet, um andere so entlasten, dass ein zusätzlicher Vorteil in der Herstellung, z.B. durch Einsparen von Fertigungsschritten, Material oder Ermöglichen alternativer Fertigungsverfahren, erwächst.

Das Einstellen des künstlichen Teilungsfehlers kann durch Änderung der Dicke der Zähne, durch unterschiedliche Zahnprofile und/oder durch die Anordnung der Zähne in der Verzahnung erfolgen. Die Verzahnungen sind somit nicht geometrisch ideal realisiert, sondern die einzelnen Zähne sind dicker oder dünner ausgeführt, weisen unterschiedliche Querschnitte oder Profile auf oder sind bezüglich der geometrisch idealen Position leicht versetzt. Der Teilungsfehler kann sich selbstverständlich auch aus einer Kombination dieser Maßnahmen zusammensetzen.

Der Teilungsfehler führt zu einem verstimmten Zahneingriff, d.h. die Zähne stehen nicht bei jeder Belastung alle gleichzeitig im Eingriff, sondern infolge der erforderlichen elastischen Verformung erst bei einer bestimmten Lastverteilung, die einen vorgegebenen, durch die Art und Größe des Teilungsfehlers einstellbaren Schwellwert überschreitet. Wird die Last auf die die geringen Drehmomente übertragenden Zähne zu groß, verformen sie sich leicht, so dass mehr Zähne zum Tragen kommen. Bei zunehmender Belastung werden daher sukzessive mehr Zähne an der Drehmomentübertragung beteiligt, bis bei maximalem Drehmomenteintrag sinnvollerweise alle Zähne zur Drehmomentübertragung beitragen. Damit ergibt sich eine belastungsabhängige Lastverteilung. Im Ergebnis führt dies dazu, dass einzelne Zähne zwar bei bestimmten oder allen Betriebsbedingungen höher belastet sind als die Zähne einer geometrisch idealen Verzahnung; die Spitzenbelastung der unter den ungünstigst möglichen Betriebsbedingungen am stärksten beanspruchten Zähne bzw. Bereiche der Synchronisierbauteile nimmt jedoch ab. Da die Synchronisiereinheit auf diese Spitzenbelastung auszulegen ist, erhöht sich durch den gezielten Teilungsfehler insgesamt die Lebensdauer bzw. das übertragbare Drehmoment.

Durch die sich im Betrieb einstellende optimierte Zahnkraftverteilung werden die Verzahnung und ihre Gegenverzahnung sowie die sie tragenden Bauteile deutlich niedriger beansprucht. Es hat sich herausgestellt, dass der Teilungsfehler bei Getriebesynchronisationen für Personenkraftwagen im Bereich von einigen Mikrometern bis maximal wenigen hundertstel Millimetern liegt. Er ist in jedem Fall um eine oder mehrere Größenordnungen kleiner als die Abmessungen der Zähne selbst.

Um die Herstellungskosten durch Nachbearbeitung oder zu hohe Anforderungen an die Fertigungsgenauigkeit in einem vertretbaren Rahmen zu halten, sollte der minimale Teilungsfehler eine herstellungstechnologiebedingte untere Grenze nicht unterschreiten. Bei der Berechnung des Teilungsfehlers für die übrigen Zähne sollte diese untere Grenze berücksichtigt werden.

Prinzipiell ist die Einstellung des Teilungsfehlers auf der Verzahnung eines Synchronisierbauteils ausreichend. Es können aber auch sowohl die Verzahnung als auch ihre Gegenverzahnung Teilungsfehler enthalten.

Ist das erste Synchronisierbauteil ein Synchronkörper und das zweite Synchronisierbauteil eine Schiebemuffe, so ist es vorteilhaft, den Teilungsfehler in der Verzahnung des Synchronkörpers vorzusehen, wenn der Zahneingriff zum Kupplungskörper nicht beeinflusst werden soll.

Die Herstellung des Teilungsfehlers innerhalb einer Verzahnung kann auf einfache Weise dadurch erfolgen, dass, insbesondere bei Sinterbauteilen oder in kaltumformtechnisch hergestellten Verzahnungen, die verstimmte Zahngeometrie in das Fertigungswerkzeug eingebracht wird.

Die Erfindung ist prinzipiell auf jede Welle-Nabe-Verbindung anwendbar, bei der die Bauteile nicht rotationssymmetrisch sind und über eine Verzahnung miteinander in Eingriff stehen. Sie eignet sich insbesondere für Kupplungsverzahnungen und Getriebesynchronisierungen.

### Kurze Beschreibung der Zeichnung

Die Erfindung ist zweckmäßigerweise anhand von Zeichnungen näher erläutert. Es zeigen:
- Figur 1: einen Querschnitt einer Baueinheit nach dem Stand der Technik am Beispiel eines Synchronkörpers und einer Schiebemuffe,
- Figur 2: eine perspektivische Darstellung der Baueinheit aus Figur 1,
- Figur 3: einen Querschnitt einer erfindungsgemäßen Bauteinheit am Beispiel eines Synchronkörpers und einer Schiebemuffe,

- Figur 4: einen vergrößerten Ausschnitt des Synchronkörpers aus Figur 3,
- Figur 5a: eine Grafik über die Durchmesserabweichung der Zähne vom mittleren Zahndurchmesser eines Synchronkörpers des Standes der Technik, dessen Verzahnung zwischen zwei Ausnehmungen zwölf Zähne aufweist,
- Figur 5b: die aus der Zahngeometrie nach Figur 5a resultierende Kraftverteilung auf die einzelnen Zähne,
- Figur 6a: eine Grafik über die Durchmesserabweichung der Zähne vom mittleren Zahndurchmesser eines erfindungsgemäßen Synchronkörpers, dessen Verzahnung zwischen zwei Ausnehmungen zwölf Zähne aufweist, und
- Figur 6b: die aus der Zahngeometrie nach Figur 6a resultierende Kraftverteilung auf die einzelnen Zähne.

### Ausführliche Beschreibung der Zeichnung

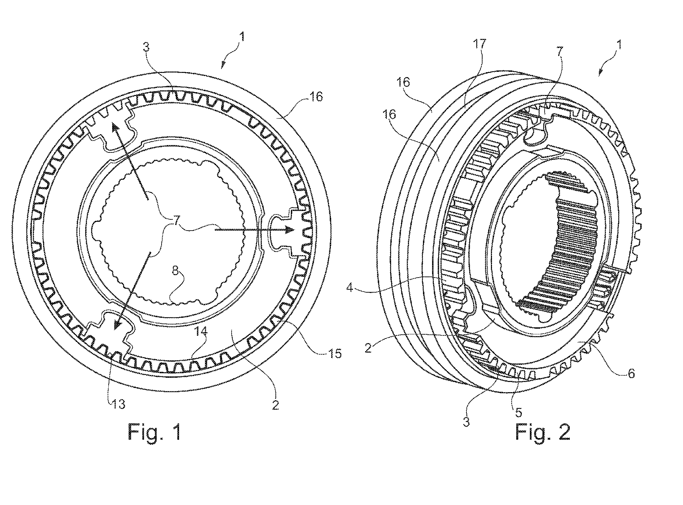

Die Figuren 1 und 2 zeigen eine erfindungsgemäße Baueinheit als Synchronisiereinheit 1. Die Synchronisiereinheit 1 weist einen Synchronkörper 2 als ein erstes Bauteil auf, an dessen nach außen gerichteten Oberfläche 3 eine äußere Verzahnung 4 angeordnet ist. Der Synchronkörper 2 weist als Nabe eine Wellenverzahnung 8 auf, mit der er drehfest auf einer Getriebewelle angeordnet werden kann. Mit der äußeren Verzahnung 4 greift der Synchronkörper 2 in eine komplementäre innere Verzahnung 14, die an der nach innen gerichteten Oberfläche 13 einer den Synchronkörper 2 konzentrisch umschließenden Schiebemuffe 12 als zweitem Bauteil angeordnet ist. Die Schiebemuffe 12 weist außenseitig eine durch Ringbandagen 16 gebildete Schaltgabelnut 17 für den Eingriff einer die Synchronisiereinheit 1 betätigenden, nicht dargestellten Schaltgabel auf. Der Synchronkörper 2 und die Schiebemuffe 12 sind über ihre sich in Axialrichtung erstreckenden Verzahnungen 4, 14 formschlüssig verbunden und axial zueinander verschiebbar.

Der Synchronkörper 2 ist kein rotationssymmetrisches Bauteil. Vielmehr ist die äußere Verzahnung 4 des Synchronkörpers 2 umfangsseitig durch drei Funktionselemente 10 in Form von Aussparungen 7 für Arretierungen in drei Verzahnungssegmente 6 gegliedert, die endseitig jeweils einen Arretierfensterzahn 18 aufweisen. Die Arretierungen (nicht dargestellt) dienen zur Einleitung des Vorsynchronisationsprozesses. Die Verzahnungssegmente 6 weisen einen Positionierzahn 9 auf, der erheblich breiter als die übrigen Zähne 5 ausgebildet ist. Mittels des Positionierzahns 9 wird bei der Montage die korrekte Winkelpositionierung der beiden Bauteile Schiebemuffe 12 und Synchronkörper 2 sichergestellt. Weiterhin sind an der Wellenverzahnung 8 Ausnehmungen 11 angeordnet.

Durch die Abweichungen von der Rotationssymmetrie ist der Synchronkörper 2 lokal unterschiedlich belastet. Dadurch dass er im Längsschnitt gesehen zwischen seinen Verzahnungen 4, 8 eine Ringnut 17 zur Gewichtsoptimierung aufweist sind einige Zähne 5 nicht unbedingt hinreichend abgestützt. Speziell die Arretierfensterzähne 18, also sie Zähne, die den Aussparungen 7 benachbart sind, erfahren besonders hohe Kräfte.

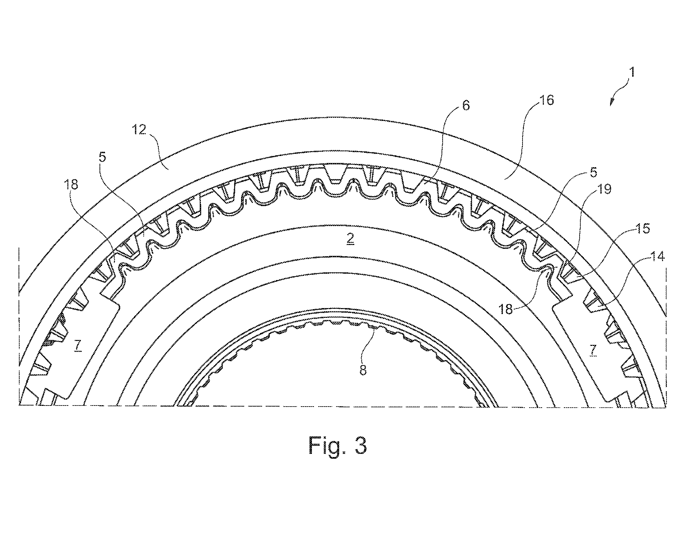

Figur 3 zeigt eine erfindungsgemäße Synchronisiereinheit 1. Sie unterscheidet sich von den Figuren 1 und 2 dadurch, dass in dem durch die beiden Arretierfensterzähne 18 gebildeten Verzahnungsabschnitt 6 die Zähne 5 des Synchronkörpers 2 eine auf ihre Belastung abgestimmte, (beispielsweise in der Mitte zwischen Zahndach und Zahnfuß gemessene,) individuelle Zahndicke dᵢ und somit einen Teilungsfehler aufweisen. Die Zähne 15 der Schiebemuffe 12 sind äquidistant angeordnet und weisen eine gleichbleibende Zahnstärke auf.

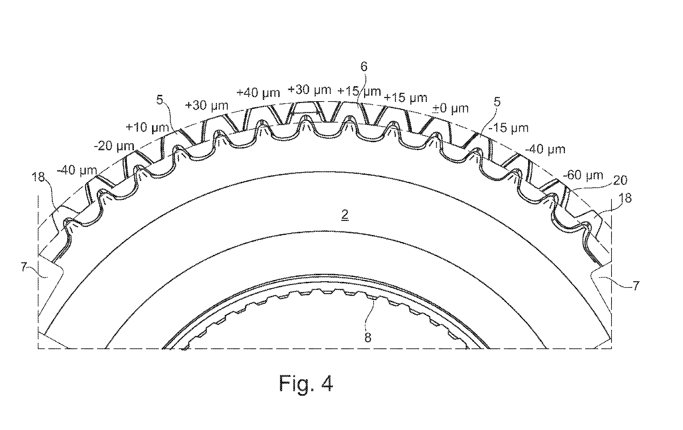

Die Zähne 5 des Synchronkörpers 2 weisen in dieser Ausführungsform alle im Wesentlichen die gleiche (Evolventen-)Grundform auf. Dem durch die Funktionselemente 10 erzeugten, ungleichmäßigen Lasteintrag wird dadurch Rechnung getragen, dass die bei abwesendem Teilungsfehler am wenigsten belasteten Zähne gegenüber den übrigen Zähnen die breitesten Zahnflanken 21 aufweisen (Figur 4). Bei schwacher Krafteinleitung werden daher diese Zähne zunächst belastet. Erst wenn sie sich aufgrund zunehmender Belastung zu verformen beginnen, tragen die benachbarten Zähne mit, so dass eine Überlast einzelner Zähne 5, 15 vermieden wird. Bei voller Drehmomenteinleitung sind die Zähne 5 des Verzahnungssegments 6 so verformt, dass sie idealerweise alle gleich tragen. Dabei ist in dieser Ausbildung der Erfindung ebenfalls auf den weiteren Aufbau des Synchronkörpers 2 bzw. der Schiebemuffe 12 abgestellt, so dass auch gezielte Abweichungen der an sich bei Maximallast gleich tragenden Zähne vorgesehen ist, um aufgrund von weiteren Funktionselementen schwächer belastbare Bereiche der Bauteile 2, 12 zu schützen.

Figur 4 zeigt den Synchronkörper der Figur 3, wobei die Zahnflanken 21 der Zähne mit dem Teilungsfehler fett und im Maßstab überhöht dargestellt sind. Zum besseren Verständnis ist in dünnen Linien eine Verzahnung ohne Teilungsfehler dargestellt.

In einer Ausbildung der Erfindung ist vorgesehen, dass die Flankenreduzierungen der einzelnen Zähne 5 im Verzahnungssegment 6 nicht symmetrisch sind. In Versuchen hat sich herausgestellt, dass eine optimale Belastung dann erreicht wird, wenn nicht der in Bezug auf die Aussparungen 7 mittig angeordnete Zahn den größten Flankendurchmesser aufweist, sondern dieser in Rotationsrichtung versetzt angeordnet ist.

Ferner sind die Flanken der Arretierfensterzähne 18 besonders stark zurückgenommen (Figur 3), so dass in unbelastetem Zustand zwischen dem Arretierfensterzahn 18 und den Zähnen 15 der Gegenverzahnung ein Spalt 19 verbleibt. Die Zahndicke ist hier soweit reduziert, dass die Arretierfensterzähne 18 in fast jedem Betriebszustand außer Eingriff stehen, so dass der Belastungseintrag von der Aussparung 7 weg verschoben wird.

Die Flankenreduzierungen 20 sind in besonders einfacher Weise nicht durch Nachbearbeitung in den ansonsten fertig hergestellten Synchronkörper 2 vorgenommen worden, sondern werden bei der Verzahnungsherstellung durch ein entsprechend präpariertes Werkzeug erzeugt, so dass eine Nacharbeit entbehrlich ist.

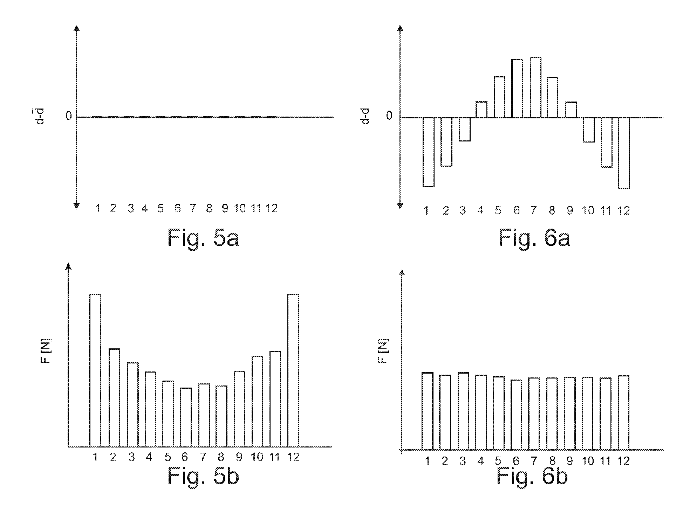

Die Figuren 5a und 5b beziehen sich auf eine Synchronisiereinheit des Standes der Technik. In Figur 5a ist die Abweichung des jeweiligen Zahndurchmessers d vom mittleren Zahndurchmesser d für ein Verzahnungssegment mit 12 Zähnen dargestellt. Aufgrund der gleichen Ausbildung aller Zähne ist die Abweichung null bzw. liegt unterhalb des fertigungstechnisch beeinflussbaren Bereichs. Einem derartigen Verzahnungssegment sind die in Figur 5b dargestellten Zahnkräfte zugeordnet. Die außenseitig gelegenen Arretierfensterzähne (erster und zwölfter Zahn) sind dabei etwa doppelt so stark belastet wie die mittleren Zähne (fünfter bis siebter Zahn).

Die Figuren 6a und 6b zeigen die Verhältnisse bei einer erfindungsgemäßen Synchronisiereinheit aus den Figuren 3 und 4. Während der Zahndurchmesser d aufgrund der vorgenommenen Flankenreduzierungen 20 nach außen hin abnimmt, vergleichmäßigt sich die Kraftverteilung auf die einzelnen Zähne. In erster Näherung und ohne Berücksichtigung anderer Funktionselemente als die Arretierfenster 10 liefert eine cosinus-förmige Dickenvariation der Zähne ein signifikant besseres Tragverhalten.

**Liste der Bezugszahlen**
1) Synchronisiereinheit
2) Synchronkörper
3) nach außen gerichtete Oberfläche
4) äußere Verzahnung
5) Zahn
6) Verzahnungssegment
7) Aussparung
8) Wellenverzahnung
9) Positionierzahn
10)Funktionselement
11)Ausnehmung
12)Schiebemuffe
13)nach innen gerichtete Oberfläche
14)innere Verzahnung
15)Zahn
16)Ringbandage
17) Schaltgabelnut
18)Arretierfensterzahn
19)Spalt
20)Flankenreduzierung
21)Zahnflanke

## Patentansprüche

1. Baueinheit (1) mit zwei Drehmoment übertragenden, konzentrisch angeordneten Bauteilen (2, 12), wobei
- das erste Bauteil (2) eine Oberfläche (3) mit einer äußeren Verzahnung (4) aufweist,
- das zweite Bauteil (12) eine Oberfläche (13) mit einer inneren Verzahnung (14) aufweist, die in die äußere Verzahnung (4) eingreift, und
- eines der beiden Bauteile (2, 12) ein Funktionselement (10) aufweist, welches eine unterschiedliche Belastung der einzelnen Zähne (5, 15) mindestens einer der Verzahnungen (4, 14) bewirkt,
- **dadurch gekennzeichnet, dass** zumindest eine der Verzahnungen (4, 14) einen Teilungsfehler aufweist, um die durch das Funktionselement (10) bzw. die Geometrie der Bauteile (2, 12) erzeugten, unterschiedlichen Belastungen zu vergleichmäßigen.

2. Baueinheit nach Anspruch 1, **dadurch gekennzeichnet, dass** die Baueinheit als Synchronisiereinheit eines Kraftfahrzeuggetriebes mit einer Schiebemuffe als zweitem Bauteil (12) ausgebildet ist, wobei die Schiebemuffe zum ersten Bauteile (2) axial verschieblich ist.

3. Baueinheit (1) nach Anspruch 2, **dadurch gekennzeichnet, dass** eine der Verzahnungen (4, 14) durch das Funktionselement (10) derart in Verzahnungssegmente (6) gegliedert ist, dass die beiden Bauteile (2, 12) nicht vollumfänglich auf ihren ganzen Oberflächen (3, 13) miteinander verzahnt sind.

4. Baueinheit (1) nach Anspruch 3, **dadurch gekennzeichnet, dass** das Funktionselement (10) eine Aussparung (7) für ein Druckstück ist und dass jeweils mehrere, an die Aussparung angrenzende Zähne (5, 15) Teilungsfehler aufweisen.

5. Baueinheit (1) nach Anspruch 1, **dadurch gekennzeichnet, dass** unter Lastübertragung die Summe der Abweichungen der einzelnen, auf jeden Zahn (5, 15) einwirkenden Zahnkräfte von der mittleren Zahnkraft geringer als bei einer äquidistanten Verzahnung ist.

6. Baueinheit (1) nach Anspruch 1, **dadurch gekennzeichnet, dass** nur eine der Verzahnungen (4, 14) einen Teilungsfehler aufweist.

7. Baueinheit (1) nach Anspruch 1, **dadurch gekennzeichnet, dass** bei geringer Drehmomentübertragung nicht alle Zähne (5, 15) der Verzahnungen (4, 14) im Eingriff stehen und erst bei Überschreiten eines Schwellwerts alle Zähne (5, 15) Kräfte übertragen.

8. Baueinheit (1) nach Anspruch 1, **dadurch gekennzeichnet, dass** der Teilungsfehler als eine Dickenreduzierung (8) oder Flankenrücknahme bestimmter Zähne ausgebildet ist.

9. Baueinheit (1) nach Anspruch 1, **dadurch gekennzeichnet, dass** die die einzelnen Zähne (5, 15) innerhalb einer Verzahnung (4, 14) nicht äquidistant voneinander beabstandet sind.

10. Baueinheit (1) nach Anspruch 1, **dadurch gekennzeichnet, dass** der Teilungsfehler zwischen einem Mikrometer und wenigen hundertstel Milimetern beträgt.
